# FASCICULE DE BREVET EUROPEEN

(11) **EP 0 594 487 B1**
(45) Date de publication et mention de la délivrance du brevet: **27.05.1998**
(21) Numéro de dépôt: 93402548.7
(22) Date de dépôt: 15.10.1993
(51) Int. Cl.: H04B 3/48

(54) **Dispositif de mesure et de réglage des signaux en voie de retour d'un réseau câblé de communication bidirectionnelle, et son utilisation**
Einrichtung zur Messung und Regelung von Signalen auf der Rückleitung eines bidirektionellen Kommunikationsnetzwerkes und ihre Anwendung
Apparatus for measuring and regulating of signals on the returnpath of a bidirectional communicationsnetwork and its use

(30) Priorité: 19.10.1992 FR 9212472
(43) Date de publication de la demande: 27.04.1994
(73) Titulaire: TELEDIFFUSION DE FRANCE, 75732 Paris Cédex 15 (FR)
(72) Inventeur: Felten, Gabriel, F-54180 Heillecourt (FR); Fiderspil, Gérard, F-57000 Metz (FR); Vidal, Claude, F-82000 Montauban (FR)
(74) Mandataire: Fréchède, Michel

(56) Documents cités:
- NL-A- 87 823
- PATENT ABSTRACTS OF JAPAN vol. 13, no. 486 (E-840)(3834) 6 Novembre 1989 & JP-A-11 092 229 (THE FURUKAWA ELECTRIC CO LTD) 2 Aoüt 1989

## Description

L'invention concerne un dispositif de mesure et de réglage des signaux en voie de retour d'un réseau câblé de communication bidirectionnelle.

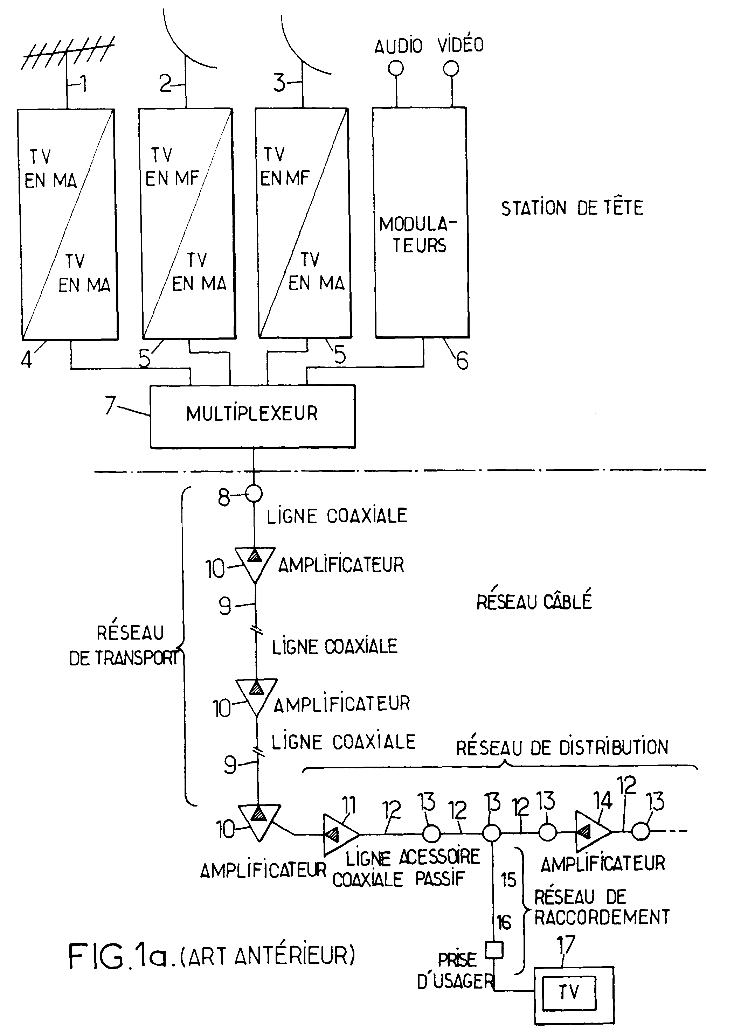

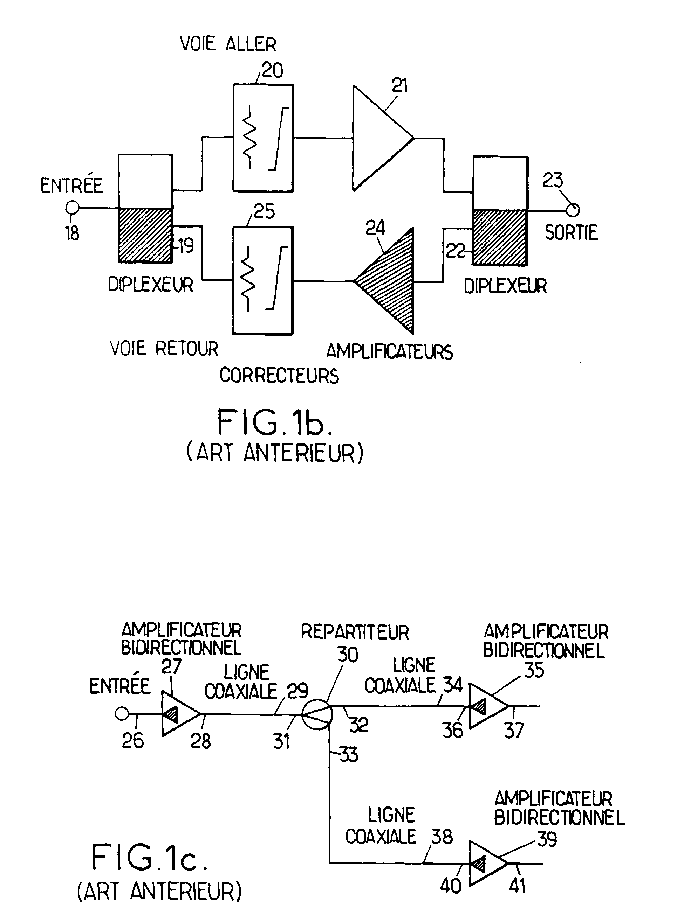

Les réseaux câblés de communication bidirectionnelle, utilisés notamment en vidéo-communication, sont actuellement formés de deux parties principales, ainsi que représenté en figure 1a.

La première partie est constituée par une station de tête assurant le traitement des programmes audio ou vidéo ou des services, transportés par le réseau câblé, et regroupant des antennes 1, 2, 3 de réception de signaux transmis par des émetteurs terrestres, par des émetteurs embarqués sur satellite ou par faisceau hertzien, des convertisseurs de fréquence 4 ou de modulation 5 permettant de transformer la modulation de fréquence des signaux reçus en modulation d'amplitude adaptée aux récepteurs de télévision, et des modulateurs d'amplitude 6 pour les signaux localement disponibles en bande de base vidéo-fréquence et audiofréquence. Un multiplexeur 7 permet de délivrer les différents signaux sur une borne de sortie 8 de la station de tête. D'autres signaux tels que radio-diffusion sonore à modulation de fréquence ou services transmis sur porteuse modulée par modulation analogique ou numérique peuvent également être transmis.

La deuxième partie, réseau câblé proprement dit, transmet sous forme d'un multiplex en radio-fréquence les différents signaux précités. Le réseau est généralement réalisé sur un support physique constitué par une paire coaxiale et présente une structure arborescente. Il comprend essentiellement le réseau de transport (ou de répartition) transmettant le multiplex, délivré par la station de tête, vers les zones de distribution, ce réseau étant formé d'une ligne coaxiale 9 à faible perte et d'amplificateurs 10 permettant de compenser celles-ci. Au réseau de transport est associé un ou plusieurs réseaux de distribution, interconnecté à un amplificateur 10 de compensation de pertes par l'intermédiaire d'un amplificateur 11 de distribution et formé par une ligne coaxiale 12 de distribution sur laquelle sont intercalés des circuits passifs dérivateurs ou répartiteurs 13 auxquels un réseau de raccordement formé par une ligne coaxiale 15 est connecté. La ligne coaxiale 15 est terminée par une prise d'usager 16, laquelle permet de répartir les signaux vers les terminaux 17 de l'usager.

Les réseaux câblés précités, uniquement chargés, à l'origine de réaliser la transmission des signaux vidéo ou audio transmis par la station de tête selon une voie dite voie aller, sont actuellement utilisés selon un processus de communication bidirectionnelle, des signaux ou messages étant en outre transmis vers la station de tête selon une voie dite voie de retour.

La répartition des sens de communication dans les différentes lignes coaxiales constitutives du réseau câblé est effectuée par multiplexage en fréquence, la bande de fréquence inférieure, typiquement, 5 à 30 MHz étant affectée à la voie de retour alors que la bande de fréquence supérieure, typiquement 50 à 860 MHz, est affectée à la voie aller.

Certaines adaptations des matériels de transmission sont nécessaires, notamment pour les différents types d'amplificateurs.

Sur la figure 1b, on a représenté la structure d'un amplificateur de ligne adapté à la communication bidirectionnelle, la voie aller comportant un diplexeur d'entrée-sortie 19, un circuit correcteur 20, un amplificateur 21, un diplexeur de sortie 22, et un circuit de sortie 23, et la voie de retour, entre les deux diplexeurs d'entrée-sortie 19, 22, un amplificateur 24, un circuit correcteur 25. L'entrée 18 pour la voie aller est connectée à la ligne coaxiale 9 ou 12 de la figure 1a, le diplexeur 19 assurant la séparation des bandes de fréquence en fonction de leur allocation selon le sens de transmission aller ou retour. Le diplexeur de sortie 22 joue un rôle identique au diplexeur d'entrée 19. Une alimentation, non représentée, fournit l'énergie électrique indispensable à l'alimentation des amplificateurs 21 et 24. Les correcteurs 20 et 25 permettent d'égaliser les pertes en fonction de la fréquence pour la voie aller respectivement la voie de retour.

En raison même de la structure arborescente des réseaux câblés précédemment décrits, il est indispensable d'assurer un strict maintien des niveaux d'amplitude des signaux transmis sur la voie aller et sur la voie de retour tant au niveau du réseau de transport que de distribution, ces signaux étant rapidement dégradés dès que le nombre de branches de l'arborescence du réseau correspondant augmente.

Une solution actuellement utilisée consiste à procurer en sortie des différents amplificateurs bidirectionnels un niveau d'amplitude identique des signaux transmis. Un tel mode opératoire implique, bien entendu, un processus de réglage du gain des différents amplificateurs, lequel apparaît long, délicat et coûteux, ainsi qu'il sera décrit en liaison avec la figure 1c.

Sur la figure 1c, on a représenté un tronçon de ligne éclatant en deux branches à partir d'un répartiteur 30, le caractère bidirectionnel des amplificateurs 27, 35 et 39 étant symbolisé par les triangles vide et plein superposés, symbolisant les amplificateurs de la voie aller respectivement de la voie retour representés en figure 1b. Les amplificateurs 27, 35 et 39 sont identiques et comportent pour les signaux transmis sur la voie aller les entrées 26, 36, 40 et les sorties 28, 37 et 41 respectivement. En sortie 28 de l'amplificateur 27, une ligne coaxiale 29 transporte les signaux jusqu'au répartiteur 30, lequel répartit la puissance d'entrée vers l'entrée 36 et 40 des amplificateurs 35 et 39, par l'intermédiaire des lignes coaxiales 34, 38. Un fonctionnement correct de l'ensemble est obtenu lorsque les amplificateurs compensent les pertes introduites par les liaisons coaxiales correspondantes. En conséquence, la puissance électrique en sortie 37 et 41 des amplificateurs 35 et 39 est identique à la puissance électrique en sortie 28 de l'amplificateur amont 27.

Toutefois, les pertes dans la liaison entre l'amplificateur 27 et l'amplificateur 35 ne sont pas nécessairement identiques à celles produites par la liaison entre les amplificateurs 27 et 39. Lors des opérations de mise en service et de réglage du réseau câblé, les circuits correcteurs 20 représentés en figure 1b sont ajustés de façon que la puissance mesurée en sortie 37 de l'amplificateur 35 soit identique à celle qui avait été mesurée sur la sortie 28. Il en est de même pour l'amplificateur 39.

De manière pratique, un signal de référence est injecté en sortie de la station de tête et la puissance en sortie de chaque amplificateur est ajustée à une même valeur, en procédant de proche en proche successivement, ce qui implique une mesure et un réglage à l'endroit géographique de chaque amplificateur.

En ce qui concerne la voie de retour, l'amplificateur 27 ne peut compenser à la fois les pertes de la liaison avec l'amplificateur 35 et les pertes de la liaison avec l'amplficateur 39, lesquelles ne sont d'ailleurs pas nécessairement identiques. Le processus de réglage de la voie retour est donc différent de celui de la voie aller et peut consister à mesurer la puissance à l'entrée 28 de l'amplificateur 27, à agir sur le correcteur 25 figure 1b de la voie d'amplification retour de l'amplificateur amont 35 pour que cette puissance mesurée soit identique à celle qui avait été mesurée sur l'entrée 37 précitée. Il faut ensuite procéder de la même manière pour l'amplificateur 39, en maintenant la mesure sur l'entrée 28 de l'amplificateur 27. Cette méthode apparaît donc très lourde car elle suppose une intervention simultanée en deux endroits, par exemple amplificateur 35 pour l'injection d'un signal de mesure de référence et action sur le correcteur de ce même amplificateur et mesure en entrée 28 de l'amplificateur 27.

Différentes tentatives d'amélioration ont été proposées.

Une première amélioration consiste à mesurer le niveau de puissance, sur la voie de retour, d'une porteuse à 10 ou 30 MHz par exemple, le niveau mesuré étant retranché à un niveau de calibration à cette fréquence et à la valeur du gain théorique de la voie de retour. Le résultat final est ajouté au niveau d'une porteuse, émise dans la bande VHF, jouant le rôle de fréquence de réglage, une porteuse de référence étant émise dans la même bande avec un niveau symbolisant le réglage théorique du gain de la voie de retour. Le réglage est effectué lorsque la porteuse de référence et la porteuse de réglage ont même niveau, obtenu par variation du gain sur l'amplificateur de la voie de retour. Cette méthode donne satisfaction, mais elle implique l'utilisation d'appareils très sophistiqués et coûteux.

Une autre amélioration consiste à placer en station de tête l'appareil de mesure de la puissance reçue par la station de tête à partir de signaux de test injectés aux amplificateurs du réseau. Une caméra filme le relevé de mesure correspondant et transmet celui-ci dans un canal TV de la voie aller, où il peut être observé par l'opérateur des réglages.

Cette méthode implique également l'utilisation d'un matériel sophistiqué et ne permet pas vraiment une simplification de la méthode classique, si ce n'est l'introduction d'une plus grande autonomie de l'opérateur de réglages sur site.

Le document NL-A-87 823 décrit un procédé de contrôle du fonctionnement d'amplificateurs intermédiaires d'une station terminale d'un système de communication. Le procédé décrit par ce document implique l'envoi simultané soit de signaux à deux fréquences porteuses différentes se situant dans la bande de fréquences supérieure et un produit d'intermodulation se situant dans la bande de fréquences inférieure, soit de signaux à une seule fréquence porteuse, se situant dans la bande de fréquences inférieure et un produit harmonique tombant dans la bande de fréquences supérieure.

Le document Patent Abstracts of Japan, vol. 13, N° 486 (E-840) (3834), 6 novembre 1989 et le document JP-A-11 092229 décrivent un amplificateur intermédiaire double voie d'un réseau câblé de télévision permettant de compenser les pertes de propagation sur la voie aller et sur la voie de retour. La mise en oeuvre d'un tel amplificateur implique l'établissement d'une valeur prédite du niveau du signal d'entrée et du signal de sortie.

La présente invention a pour but la mise en oeuvre d'un dispositif de mesure et de réglage de la voie de retour d'un réseau câblé permettant de conférer une autonomie et une indépendance totale de l'opérateur des réglages sur site utilisant le dispositif précité, celui-ci pouvant n'intervenir qu'en un seul point géographique pour un amplificateur donné.

Un autre objet de la présente invention est la mise en oeuvre d'un dispositif de mesure et de réglage de la voie de retour d'un réseau câblé de communication bidirectionnelle permettant à un opérateur de réglage d'effectuer de proche en proche le réglage de chaque amplificateur tant de la voie aller que de la voie de retour successivement de ce réseau.

Un autre objet de la présente invention est la mise en oeuvre d'un dispositif de mesure et de réglage de la voie de retour d'un réseau câblé mettant en oeuvre des composants ou appareillages courants.

Le dispositif de mesure et de réglage de signaux en voie de retour d'un réseau câblé de communication bidirectionnelle, à partir de signaux de test, comprenant une voie aller et une voie de retour, objet de la présente invention, est remarquable en ce qu'il comporte un circuit de couplage du dispositif de mesure et de réglage au réseau câblé permettant de prélever les signaux de test sur la voie de retour. Un circuit convertisseur de fréquence est interconnecté au circuit de couplage et permet d'opérer une translation de la bande de fréquence des signaux de test sur la voie de retour dans une bande de fréquences de la voie aller pour délivrer un signal de test converti. Un circuit générateur d'un signal à puissance ajustable est prévu pour délivrer un signal de référence ayant une fréquence voisine de celle du signal de test converti et un circuit sommateur reçoit, indépendemment, le signal de test converti et le signal de référence et délivre en sortie un signal résultant dont la fréquence est sensiblement celle du signal de test converti. La sortie du circuit sommateur est connectée au circuit de couplage pour réinjecter au niveau de la voie aller le signal résultant, ce qui permet d'effectuer le réglage des éléments de la voie aller et de la voie de retour.

Le dispositif objet de la présente invention trouve application à la mise en oeuvre et à la maintenance des réseaux câblés de communication bidirectionnelle, tels les réseaux câblés de vidéo-communication.

Il sera mieux compris, tant dans sa mise en oeuvre que dans son utilisation, à la lecture de la description et à l'observation des dessins ci-après dans lesquels, outre les figures la à lc relatives à l'art antérieur,
- la figure 2 représente un schéma du dispositif objet de la présente invention,
- la figure 3a représente, sous forme synoptique, un diagramme illustratif du processus d'étalonnage du dispositif objet de l'invention,
- la figure 3b représente, sous forme synoptique, un diagramme illustratif du processus de réglage au moyen du dispositif objet de l'invention pour tout amplificateur d'un réseau câblé,
- la figure 3c, représente sous forme synoptique, un diagramme illustratif d'un processus de réglage, de proche en proche, dans le sens de propagation de la voie aller, tant de la voie aller que de la voie de retour des amplificateurs bidirectionnels constitutifs du réseau câblé, grâce à la mise en oeuvre du dispositif selon l'invention,
- la figure 4 représente une variante de réalisation du dispositif selon l'invention représenté en figure 2.

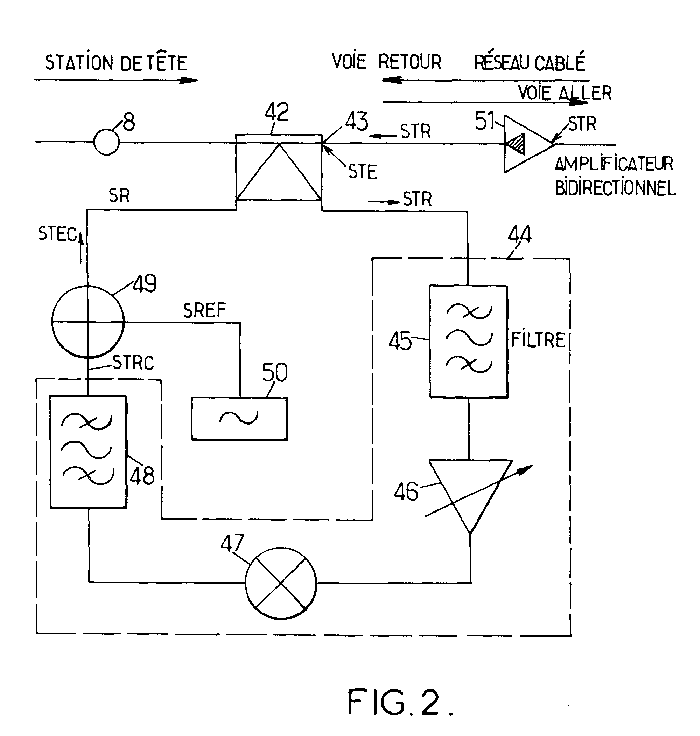

Une description plus détaillée du dispositif de mesure et de réglage des signaux en voie de retour d'un réseau câblé de communication bidirectionnelle, à partir de signaux de test, conforme à l'objet de la présente invention, sera maintenant donnée en liaison avec la figure 2.

En premier lieu, on indique que le réseau câblé comprend, de manière classique, une voie aller et une voie de retour dans les conditions définies précédemment dans la description, ceci afin de permettre une communication bidirectionnelle sur ce réseau.

Selon un aspect particulièrement avantageux du dispositif objet de la présente invention, celui-ci comprend un circuit 42 de couplage du dispositif de mesure et de réglage au réseau câblé, ce dispositif de couplage permettant de prélever des signaux de test sur la voie de retour.

En outre, un circuit convertisseur de fréquence 44 est prévu, ce circuit étant interconnecté au circuit de couplage 42 et permettant d'opérer une translation de la bande de fréquence des signaux de test sur la voie de retour dans une bande de fréquence de la voie aller pour délivrer un signal de test converti. Sur la figure 2, on note STR le signal de test sur la voie de retour, lequel est injecté par exemple à l'entrée de l'amplificateur 51 dont le réglage doit être effectué, cette entrée étant considérée comme l'entrée de la voie de retour de l'amplificateur 51 précité dans les conditions de description des amplificateurs bidirectionnels utilisés, ainsi que décrit précédemment dans la description. En outre, le signal de test converti est noté STRC, ce signal de test converti étant délivré en sortie du circuit 44 convertisseur de fréquence.

En outre, ainsi que représenté en figure 2, le dispositif objet de la présente invention comprend un circuit 50 générateur d'un signal de référence, noté SREF, à puissance et à fréquence ajustable, la fréquence du signal de référence précitée ayant une fréquence dont la valeur peut être ajustée à une valeur voisine de celle du signal de test converti, STRC. Par valeur voisine de la fréquence de ces deux signaux, on entend toute valeur distincte pouvant être séparée au moyen d'un appareil tel qu'un analyseur de spectre, la différence de fréquence en valeur relative entre les deux signaux pouvant par exemple être rendue aussi petite que 5 %. Toutefois, on notera, ainsi qu'il sera décrit ultérieurement dans la description, que la fréquence du signal de référence délivré par le circuit générateur 50 peut également être réglée à des valeurs couvrant non seulement la fréquence du signal de test converti STRC, mais également la bande de fréquence de la voie aller, ceci à des fins de réglage et d'utilisation du réseau câblé qui seront explicitées ultérieurement dans la description.

Enfin, le dispositif objet de la présente invention comprend un circuit sommateur 49 recevant indépendemment le signal de test converti, STRC, et le signal de référence, SREF, et délivrant en sortie un signal résultant dont la fréquence est sensiblement celle du signal de test converti lorsque les fréquences de ces deux signaux sont voisines ainsi que mentionné précédemment. Par réception indépendante du signal de test converti STRC et du signal de référence SREF, on entend la réception par le circuit sommateur 49 précité de ces deux signaux dans les conditions de multiplexage de fréquence, soit dans la même bande de fréquence allouée à la voie de retour, soit en ce qui concerne le signal de référence ainsi que mentionné précédemment, dans la bande de fréquence des signaux alloués à la voie aller.

La sortie du circuit sommateur 49 est interconnectée à une entrée du circuit de couplage 42, ce qui permet de réinjecter au niveau de la voie aller le signal résultant SR précité, afin d'effectuer le réglage des éléments de la voie aller et de la voie de retour dans les conditions qui seront explicitées ultérieurement dans la description.

Lorsque dans un mode opératoire du dispositif objet de la présente invention le signal de référence SREF et le signal STRC ont des fréquences voisines, le signal résultant SR comprend les composantes de fréquence correspondantes avec les niveaux de puissance des deux signaux d'origine, signal de test converti, STRC, et signal de référence, SREF.

On comprend en effet que suite à l'injection du signal de test sur la voie de retour, STR, au niveau de l'entrée de l'amplificateur 51, la conversion de ce signal prélevé par le circuit de couplage 42 suite au changement de fréquence effectué par le circuit de changement de fréquence, 44, permet, la voie aller ayant fait l'objet d'un réglage indépendant par exemple, de réévaluer la puissance du signal de test converti, STRC, par rapport à la valeur de la puissance du signal de référence, SREF, par simple réglage du circuit correcteur de perte de la voie de retour de l'amplificateur 51, ainsi que décrit précédemment dans la description, les niveaux de puissance du signal de test converti, SRC, et du signal de référence étant bien entendu mesurés au même point d'injection du signal de test de référence STR à l'entrée de l'amplificateur 51 constituant en fait la sortie de la voie aller de ce même amplificateur.

Une description plus détaillée du circuit convertisseur 44 de fréquence sera donnée également en liaison avec la figure 2. Le circuit précité peut comporter avantageusement en cascade un filtre 45 centré sur la fréquence des signaux de test, STR, sur la voie de retour, ces signaux de test étant dans la bande de fréquence de la voie de retour. Le filtre 45 a son entrée connectée au circuit de couplage 42. En outre, un amplificateur 46 à gain réglable est connecté en cascade avec le filtre 45, cet amplificateur ayant sa sortie connectée à un circuit 47 de changement de fréquence propement dit. On notera par exemple que le circuit de changement de fréquence proprement dit 47 peut être réalisé par tout mélangeur de type classique muni d'un oscillateur à quartz stabilisé permettant d'effectuer le changement de fréquence requis dans des conditions de stabilité et de fiabilité de la valeur de la fréquence du signal de test converti, STRC.

Selon le mode de réalisation avantageux représenté en figure 2, le circuit sommateur 49 comporte une entrée connectée en sortie du circuit convertisseur 44 de fréquence, ou plus particulièrement du circuit 47 de changement de fréquence proprement dit, par l'intermédiaire d'un filtre 48 centré sur la fréquence centrale du signal de test converti, STRC.

On notera que les filtres 45 et 48 peuvent être réalisés par des filtres adaptés de type classique et dont la courbe de réponse est plate et de type passe-bande dans le domaine de fréquence alloué à la voie retour respectivement à la voie aller.

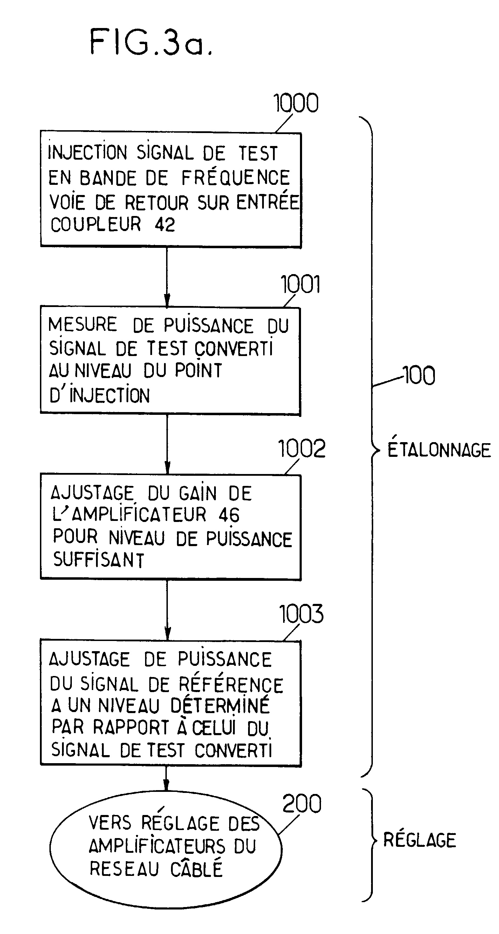

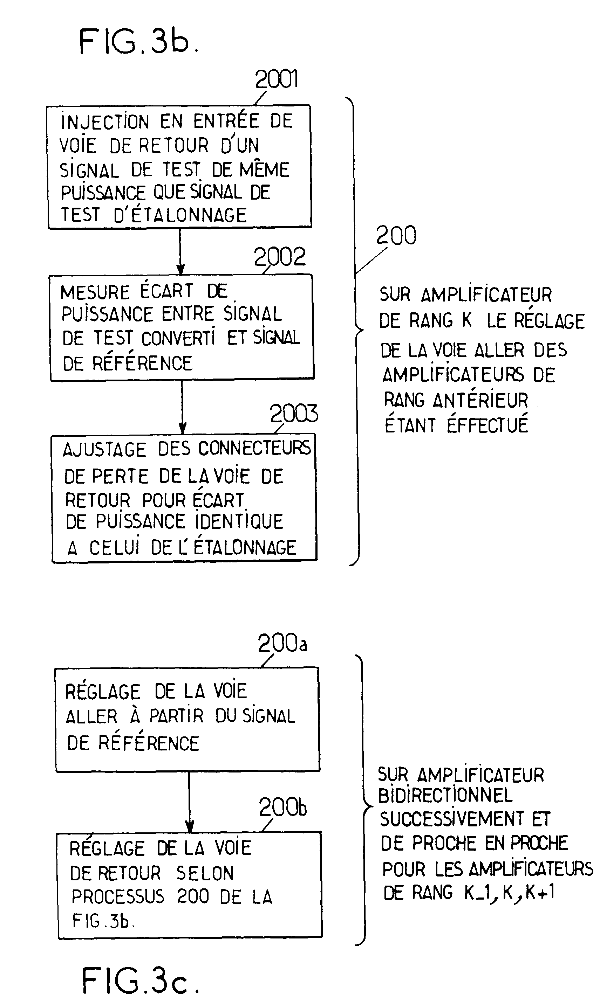

Une description plus détaillée d'une utilisation particulièrement avantageuse d'un dispositif de mesure et de réglage de signaux en voie de retour d'un réseau câblé de communication bidirectionnelle, tel que représenté en figure 2, sera maintenant donnée en liaison avec les figures 3a, 3b et 3c.

Ainsi que représenté sur la figure 2 précitée, l'utilisation du dispositif objet de la présente invention consiste à coupler le circuit précité au voisinage de la sortie 8 de la station de tête du réseau. Bien entendu, la notion de voisinage consiste ici en la notion purement matérielle de l'adaptation du circuit de couplage 42 à la sortie 8 de la tête de réseau dans les conditions habituelles d'interconnexion pour les signaux UHF ou VHF des bandes de fréquence allouées à la voie aller, respectivement à la voie de retour.

Le couplage précité ayant été effectué, l'utilisation objet de la présente invention consiste alors à effectuer une étape d'étalonnage 100 du dispositif selon l'invention couplée à la sortie de la tête du réseau. L'étape d'étalonnage a été représentée au moyen d'un diagramme schématique sur la figure 3a. Cette étape d'étalonnage peut comporter avantageusement des étapes successives consistant à effectuer une étape 1000 d'injection au niveau du circuit de couplage 42 et en particulier de l'entrée 43 de celui-ci placée côté aval vis-à-vis du circuit de couplage 42 dans le sens de propagation de la voie aller, un signal de test dans la bande de fréquence de la voie de retour. Bien entendu, ce signal de test, dit signal de test d'étalonnage, est un signal calibré tant en niveau de puissance qu'en fréquence. Le signal de test d'étalonnage porte la référence STE sur la figure 2.

L'étape 1000 précitée est alors suivie d'une étape 1001 de mesure de la puissance du signal converti délivré par le circuit convertisseur de fréquence 44, cette mesure étant effectuée après transmission par le circuit sommateur 49 et par le circuit de couplage 42, c'est-à-dire au niveau du point d'entrée ou d'injection 43 du signal de test d'étalonnage, STE. Cette mesure est bien entendu possible sans difficulté pour l'opérateur, puisque le signal de test converti est duplexé en fréquence par le circuit sommateur 49, la fréquence centrale de ce signal converti étant bien entendu dans la bande de fréquence allouée à la voie aller.

L'étape 1001 précitée peut alors être suivie d'un ajustage du gain par l'amplificateur 46 pour obtenir un niveau de puissance suffisant au niveau de la borne 43 du circuit de couplage 42, afin de permettre une mesure satisfaisante de celui-ci.

L'étape 1002 précitée peut alors être suivie d'une étape 1003 d'ajustage de la puissance du signal de référence SREF à un niveau de puissance déterminé par rapport au niveau de puissance du signal de test d'étalonnage converti. Ce niveau de puissance déterminé peut être exprimé en dB à une valeur tenant compte notamment des différences d'atténuation subies par le signal de test d'étalonnage et par le signal de référence, du fait de leur parcours différent dans le dispositif objet de la présente invention. Bien entendu, l'ajustage du gain de l'amplificateur 46 permet de prendre un écart de puissance entre le niveau du signal de référence et le niveau du signal de test d'étalonnage reconverti égal à 0 dB.

En suite, l'étape 1003 précitée de la phase d'étalonnage, 100, peut alors être suivie de l'étape de réglage des amplificateurs du réseau câblé, notée 200 sur la figure 3a, laquelle sera décrite plus en détail en liaison avec la figure 3b.

L'étape de réglage 200 décrite en liaison avec les figures 3a et 3b peut être réalisée après réglage de la voie aller, par exemple. Par voie aller, dans le processus d'utilisation du dispositif objet de la présente invention, on comprend bien entendu tout réseau câblé entier ou toute partie de réseau câblé, telle que représentée dans les figures 1a à 1c précédemment décrite dans la description, le réglage pouvant bien entendu être réalisé en fonction des impératifs d'exploitation. Conformément à la figure 3b, l'étape 200 de conduite de réglage des amplificateurs du réseeau câblé consiste, pour tout amplificateur de rang k, le réglage de la voie aller des amplificateurs de rang antérieur étant effectué, à injecter en entrée de tout amplificateur de la voie de retour, un signal de test de même puissance que le signal de test d'étalonnage utilisé pour la phase d'étalonnage. Bien entendu, et de préférence, le signal de test, noté STR, injecté à l'entrée de l'amplificateur 51 sur la figure 2, aura également la même fréquence que le signal de test d'étalonnage utilisé pour réaliser l'étape d'étalonnage précédemment décrite. L'étape d'injection porte la référence 2001 sur la figure 3b. Cette étape d'injection est suivie d'une étape 2002 consistant à mesurer l'écart de puissance entre le signal de test converti, STRC, et le signal de référence, SREF, ces signaux étant bien entendu reçus suite au couplage par le circuit de couplage 42 via la voie aller de l'amplificateur 51 et étant ainsi mesurés en sortie de cette voie aller, c'est-à-dire à l'entrée, et donc au même point d'intervention de l'opérateur de la voie de retour de ce même amplificateur 51. Cette injection et cette mesure peuvent être réalisés par l'opérateur au moyen d'appareils de type classique.

L'étape 2002 précitée est alors suivie d'une étape 2003 d'ajustage des correcteurs de perte de la voie de retour pour obtenir un écart de puissance identique à celui mesuré lors de l'étape d'étalonnage entre le signal de test d'étalonnage converti et le signal de référence. On comprend que dans ces conditions, la voie de retour de l'amplificateur 51 est alors transparente à la transmission du signal de test sur la voie de retour, STR.

On comprend ainsi que le dispositif objet de la présente invention permet, le réglage de la voie aller ayant été effectué au préalable, ou le réglage d'une portion de celle-ci, d'effectuer de proche en proche le réglage des voies de retour des amplificateurs correspondants, et ce dans le sens de propagation de la voie aller.

En outre, et selon une caractéristique particulièrement avantageuse représentée en figure 3c, les réglages de la voie aller et de la voie de retour ou d'une portion de ces voies peuvent être effectués successivement pour chaque amplificateur et de proche en proche dans le sens de propagation de la voie aller, ainsi qu'il sera décrit ci-après en liaison avec la figure 3c.

Dans ce but, l'étape 200 de réglage proprement dit, suite bien entendu à l'étape 100 d'étalonnage, peut être réalisée en deux sous-étapes, notées 200a et 200b, l'étape 200a consistant en un réglage de la voie aller à partir du signal de référence, par exemple, et l'étape 200b consistant au réglage de la voie de retour selon le processus 200 de la figure 3b. Dans ce cas, les étapes 200a et 200b sont réalisées sur l'amplificateur bidirectionnel de tête, c'est-à-dire l'amplificateur bidirectionnel situé à proximité immédiate de la sortie 8 de la tête de station, puis successivement et de proche en proche, pour les amplificateurs de rang k-1,k,k+1 et ainsi de suite sur la totalité ou partie du réseau à régler. On comprend en particulier que, afin de réaliser l'étape 200a réalisée en figure 3c, il est alors avantageux de régler la fréquence du signal de référence, SREF, à une ou plusieurs valeurs correspondantes de la bande de fréquence de la voie aller, afin d'effectuer les réglages de la voie aller de l'amplificateur 51 représenté sur la figure 2. On rappelle que ces réglages sont effectués à partir du circuit de correction de perte de la voie aller de ce même amplificateur. Pour effectuer le réglage de la voie aller, la voie d'entrée du signal de test converti du circuit sommateur 49 peut alors être mise en court-circuit de façon à éviter toute introduction de parasites sur le signal de référence transmis par le circuit sommateur 49.

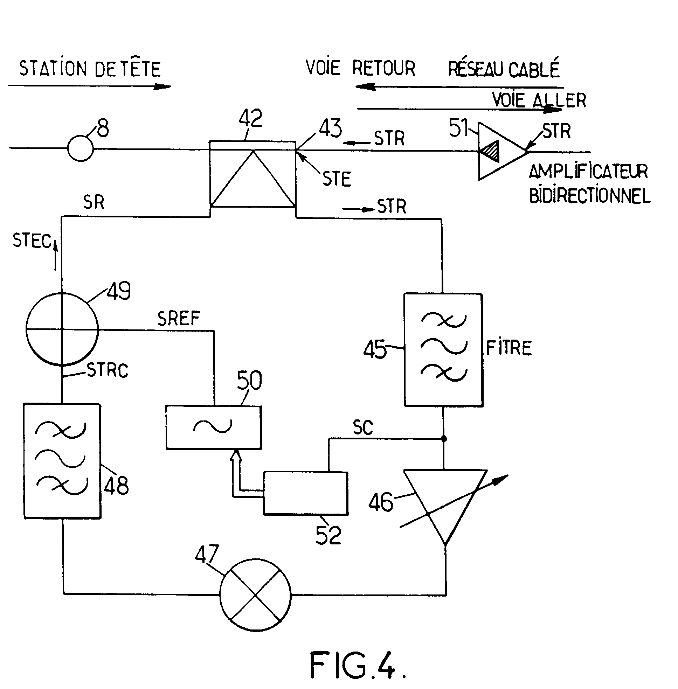

Afin d'assurer une commande de la fréquence d'émission du circuit générateur, formé par un oscillateur, 50, le dispositif objet de la présente invention peut alors comporter avantageusement, ainsi que représenté en figure 4, un circuit 52 de décodage d'un signal de commande, noté SC, ce signal de commande, SC, étant injecté par l'opérateur au niveau de l'entrée de la voie de retour de l'amplificateur 51 transmis par cette voie de retour non encore réglée, puis par le circuit coupleur 42, enfin par le filtre 45. Ce signal de commande SC peut consister avantageusement en un signal modulant par impulsions le signal de test de la voie de retour, STR, ou une fraction de la puissance de celui-ci bien entendu, ce signal de commande codé permettant sur décodage par le circuit de décodage 52 une commande de la fréquence d'émission de l'oscillateur 50 et finalement de la fréquence du signal de référence, SREF. On comprend ainsi que le signal de commande injecté à l'entrée de la voie de retour de l'amplificateur 51 est transmis avec une fiabilité et une précision suffisantes du point de vue du codage par la voie de retour de l'amplificateur 51, bien que celle-ci ne soit pas encore réglée, pour ainsi commander la fréquence du signal de référerence, soit à la valeur d'une ou plusieurs fréquences de la voie aller pour effectuer le réglage de la voie aller de l'amplificateur 51, puis ensuite la commande de l'oscillateur 50 pour engendrer le signal de référence SREF en vue, soit de la phase d'étalonnage, soit du réglage successif des amplificateurs de rang supérieur.

Grâce à la mise en oeuvre du dispositif objet de la présente invention représenté en figure 4, le réglage de la voie aller et de la voie de retour peuvent être ainsi effectués au niveau de chaque amplificateur de rang successif au cours d'un seul et même déplacement géographique sur le site de l'amplificateur considéré pour l'opérateur effectuant le réglage.

On a ainsi décrit un dispositif de réglage de la voie de retour et de la voie aller d'un réseau de communications bidirectionnel particulièrement avantageux dans la mesure où le dispositif objet de l'invention de structure peu complexe permet la mise en oeuvre des réglages précités, grâce à des mesures de puissance effectuées uniquement à l'endroit où l'opérateur de réglage intervient pour un réglage ou un contrôle.

On notera en particulier que l'injection des différents signaux pour les étapes d'étalonnage et de réglage proprement dits peuvent être effectués par des moyens classique qui peuvent être un diplexeur à filtre comprenant une entrée transmettant la bande de fréquence de la voie de retour, typiquement de 10 à 30 MHz, à laquelle est connecté un générateur de signaux de test, une entrée transmettant la bande de fréquence de la voie aller, typiquement de 50 à 860 MHz, à laquelle est connecté un circuit de mesure de puissance tel qu'un analyseur de spectre ou Wattmètre, et une sortie de couplage transmettant les deux bandes de fréquence qui est connectée à l'amplificateur en réglage.

On notera bien sûr que dans le cas où la version de la figure 4 est utilisée, le dispositif objet de la présente invention est ainsi rendu totalement autonome.

## Revendications

1. Dispositif de mesure et de réglage des signaux en voie de retour d'un réseau câblé de communication bidirectionnelle à partir de signaux de test, comprenant une voie aller et une voie de retour, caractérisé en ce qu'il comporte :
- des moyens de couplage (42) dudit dispositif de mesure et de réglage au réseau câblé permettant de prélever lesdits signaux de test sur la voie de retour (STR) et connectés auxdits moyens de couplage (42),
- des moyens (44) convertisseurs de fréquence interconnectés auxdits moyens de couplage (42) et permettant d'opérer une translation de la bande de fréquence des signaux de test sur la voie de retour (STR) dans une bande de fréquence de la voie aller pour délivrer un signal de test converti (STRC),
- des moyens (50) générateurs d'un signal de référence (SREF) à puissance ajustable, le signal de référence (SREF) ayant une fréquence voisine de celle du signal de test converti (STRC),
- des moyens sommateurs (49) recevant indépendemment ledit signal de test converti (STRC) et le signal de référence (SREF) et délivrant en sortie un signal résultant (STEC) dont la fréquence est sensiblement celle du signal de test converti, la sortie desdits moyens sommateurs (49) étant connectée auxdits moyens de couplage (42) pour réinjecter au niveau de la voie aller ledit signal résultant (STEC), ce qui permet d'effectuer le réglage des éléments de la voie aller et de la voie de retour.

2. Dispositif selon la revendication 1, caractérisé en ce que lesdits moyens (44) convertisseurs de fréquence comportent en cascade ;
- un filtre (45) centré sur la fréquence des signaux de test (STR), dans la bande de fréquence de la voie de retour, le filtre (45) ayant son entrée connectée auxdits moyens de couplage (42),
- un amplificateur (46) à gain réglable, ledit amplificateur (46) ayant sa sortie connectée à un circuit (47) de changement de fréquence proprement dit.

3. Dispositif selon la revendication 1 ou 2 caractérisé en ce que lesdits moyens sommateurs (49) ont une entrée connectée en sortie dudit circuit de changement de fréquence (47) par l'intermédiaire d'un filtre (48) centré sur la fréquence centrale de la bande de fréquence du signal de test converti (STRC).

4. Utilisation d'un dispositif de mesure et de réglage de signaux en voie de retour d'un réseau câblé de communication bidirectionnelle selon l'une des revendications 1 à 3, caractérisé en ce que ladite utilisation consiste :
- à coupler ledit dispositif au voisinage de la sortie de la station de tête du réseau, et
- à effectuer une étape (100) d'étalonnage dudit dispositif, cette étape d'étalonnage consistant à
. injecter (1000) au niveau des moyens de couplage (42) un signal de test d'étalonnage (STR) dans la bande de fréquence de la voie de retour,
. à mesurer (1001) la puissance du signal converti (STRC) délivré par lesdits moyens convertisseurs de fréquence (44), au niveau du point d'injection (43),
. à ajuster (1002) le gain de l'amplificateur (46) pour obtenir un niveau de puissance suffisant,
. à ajuster (1003) la puissance du signal de référence (SREF) à un niveau de puissance déterminé par rapport au niveau de puissance du signal de test converti (STRC) et
- à conduire (200) le réglage des amplificateurs du réseau câblé après la phase d'étalonnage.

5. Utilisation selon la revendication 4, caractérisée en ce que l'étape de conduite de réglage des amplificateurs du résau câblé consiste après réglage de la voie aller :
- à injecter (2001) en entrée de tout amplificateur de la voie de retour, un signal de test (STR) de même puissance que le signal de test utilisé pour la phase d'étalonnage,
- à mesurer (2002) l'écart de puissance entre le signal de test converti (STRC) et le signal de référence (SREF),
- à ajuster les correcteurs de perte de cet amplificateur de la voie de retour pour obtenir un écart identique à celui mesuré lors de l'étalonnage.

6. Utilisation selon l'une des revendications 4 ou 5, caractérisé en ce que les réglages de la voie aller et de la voie de retour sont effectués successivement et de proche en proche pour chaque amplificateur dans le sens de propagation de la voie aller, le réglage de la voie aller et de la voie de retour étant ainsi effectué au niveau de chaque amplificateur au cours d'un seul et même déplacement géographique sur le site de l'amplificateur considéré.

## Patentansprüche

1. Einrichtung zum Messen und Regulieren von Rückwegsignalen eines einen Hinweg und einen Rückweg umfassenden bidirektionalen Kabelkommunikationsnetzes vermittels Testsignalen, dadurch gekennzeichnet, daß die Einrichtung umfaßt:
- Koppelmittel (42) zum Koppeln der Meß- und Reguliereinrichtung mit dem Kabelnetz, wobei es die Koppelmittel (42) erlauben, die Testsignale auf dem Rückweg (STR) abzugreifen, und verbunden mit den Koppelmitteln (42)
- Frequenzwandlermittel (44), welche mit den Koppelmitteln (42) verschaltet sind und es erlauben, eine Umsetzung des Frequenzbands der Testsignale auf dem Rückweg (STR) in ein Frequenzband des Hinwegs durchzuführen, um ein umgewandeltes Testsignal (STRC) zu liefern,
- Generatormittel (50) zum Erzeugen eines Referenzsignals (SREF) einstellbarer Energie, wobei das Referenzsignal (SREF) eine Frequenz besitzt, die derjenigen des umgewandelten Testsignals (STRC) benachbart ist,
- Summationsmittel (49), welche das umgewandelte Testsignal (STRC) sowie das Referenzsignal (SREF) unabhängig voneinander erhalten und ausgangsseitig ein resultierendes Signal (STEC) liefern, dessen Frequenz im wesentlichen diejenige des umgewandelten Testsignals ist, wobei der Ausgang der Summationsmittel (49) mit den Koppelmitteln (42) verbunden ist, um das resultierende Signal (STEC) wieder in den Hinweg einzuspeisen, was es erlaubt, die Regulierung der Elemente des Hinwegs und des Rückwegs durchzuführen.

2. Einrichtung nach Anspruch 1, dadurch gekennzeichnet, daß die Frequenzwandlermittel (44) in Kaskade umfassen:
- ein Filter (45), welches auf die Frequenz der im Frequenzband des Rückwegs liegenden Testsignale (STR) zentriert ist, wobei der Eingang des Filters (45) mit den Koppelmitteln (42) verbunden ist,
- einen Verstärker (46) mit regulierbarem Verstärkungsfaktor, wobei der Ausgang des Verstärkers (46) mit einer Schaltung (47) zur eigentlichen Frequenzänderung verbunden ist.

3. Einrichtung nach Anspruch 1 oder 2, dadurch gekennzeichnet, daß die Summationsmittel (49) einen Eingang besitzen, welcher unter Zwischenschaltung eines auf die Mittenfrequenz des Frequenzbands des umgewandelten Testsignals (STRC) zentrierten Filters (48) mit dem Ausgang der Frequenzänderungsschaltung (47) verbunden ist.

4. Verwendung einer Einrichtung zum Messen und Regulieren von Rückwegsignalen eines bidirektionalen Kabelkommunikationsnetzes nach einem der Ansprüche 1 bis 3, dadurch gekennzeichnet, daß die Verwendung umfaßt:
- die Einrichtung in der Nähe des Ausgangs der Kopfstation des Netzes anzukoppeln und
- einen Schritt (100) zum Abgleichen der Einrichtung durchzuführen, wobei dieser Abgleichschritt umfaßt,
- ein Abgleichtestsignal (STR) im Frequenzband des Rückwegs in die Koppelmittel (42) einzuspeisen (1000),
- die Energie des von den Frequenzwandlermitteln (44) gelieferten umgewandelten Signals (STRC) im Bereich des Einspeisungspunkts (43) zu messen (1001),
- den Verstärkungsfaktor des Verstärkers (46) zu justieren (1002), um eine hinreichende Energiehöhe zu erreichen,
- die Energie des Referenzsignals (SREF) auf eine Energiehöhe einzustellen (1003), die in bezug auf die Energiehöhe des umgewandelten Testsignals (STRC) festgelegt ist, und
- die Regulierung der Verstärker des Kabelnetzes nach der Abgleichphase durchzuführen (200).

5. Verwendung nach Anspruch 4, dadurch gekennzeichnet, daß der Schritt der Durchführung der Regulierung der Verstärker des Kabelnetzes nach der Regulierung des Hinwegs umfaßt:
- am Eingang jedes Verstärkers des Rückwegs ein Testsignal (STR) gleicher Energie wie das für die Abgleichphase benutzte Testsignal einzuspeisen (2001),
- die Abweichung der Energie zwischen dem umgewandelten Testsignal (STRC) und dem Referenzsignal (SREF) zu messen (2002),
- die Verlustausgleicher dieses Verstärkers des Rückwegs zu justieren, um eine Abweichung zu erhalten, die identisch zu der beim Abgleich gemessenen ist.

6. Verwendung nach einem der Ansprüche 4 oder 5, dadurch gekennzeichnet, daß die Regulierungen des Hinwegs und des Rückwegs nacheinander und schrittweise für jeden Verstärker in Ausbreitungsrichtung des Hinwegs durchgeführt werden, wobei so die Regulierung des Hinwegs und des Rückwegs im Bereich jedes Verstärkers im Zuge ein und derselben geographischen Verlagerung an der Stelle des betrachteten Verstärkers durchgeführt wird.

## Claims

1. A system for measuring and controlling signals on the return channel of a cabled two-way communication network on the basis of test signals, comprising an outgoing channel and a return channel, characterised in that it comprises:
- means (42) for coupling the said measuring and control system to the cabled network allowing sampling of the said test signals on the return channel (STR) and connected to the said coupling means (42),
- frequency converter means (44) interconnected to the said coupling means (42) and allowing translation of the frequency band of the test signals on the return channel (STR) into a frequency band of the outgoing channel to deliver a converted test signal (STRC),
- means (50) for generating a reference signal (SREF) of adjustable power, the reference signal (SREF) having a frequency close to that of the converted test signal (STRC),
- summating means (49) independently receiving the said converted test signal (STRC) and the reference signal (SREF) and outputting a resultant signal (STEC), the frequency of which is substantially that of the converted test signal, the output of the said summator means (49) being connected to the said coupling means (42) in order to re-inject the said resultant signal (STEC) at the outgoing channel, thus allowing control of the elements of the outgoing channel and of the return channel.

2. A system according to claim 1, characterised in that the said frequency converter means (44) comprise in cascade:
- a filter (45) centred on the frequency of the test signals (STR) in the frequency band of the return channel, the filter (45) having its input connected to the said coupling means (42),
- a variable gain amplifier (46), the said amplifier having its output connected to a frequency changer circuit (47) proper.

3. A system according to claim 1 or 2, characterised in that the said summator means (49) have one input connected to the output of the frequency changer circuit (47) via a filter (48) centred on the central frequency of the frequency band of the converted test signal (STRC).

4. Use of a system for measuring and controlling signals in the return channel of a cabled two-way communication network, according to any one of claims 1 to 3, characterised in that the said use comprises:
- coupling said system near the output of the network head station, and
- effecting a calibration step (100) on the said system, said calibration step comprising:
• injecting (1000) at the coupling means (42) a calibration test signal (STR) in the frequency band of the return channel,
• measuring (1001) the power of the converted signal (STRC) delivered by the said frequency converter means (44) at the injection point (43),
• adjusting (1002) the gain of the amplifier (46) to obtain an adequate power level,
• adjusting (1003) the power of the reference signal (SREF) to a specific power level relatively to the power level of the converted test signal (STRC) and
- effecting (200) control of the amplifiers of the cabled network after the calibration phase.

5. Use according to claim 4, characterised in that the control effecting step carried out on the amplifiers of the cabled network comprises, after control of the outgoing channel:
- injecting (2001) at the input of any amplifier of the return channel, a test signal (STR) of the same power as the test signal used for the calibration phase,
- measuring (2002) the power difference between the converted test signal (STRC) and the reference signal (SREF),
- adjusting the loss correctors of this amplifier of the return channel to obtain an identical difference from that measured during the calibration.

6. Use according to claim 4 or 5, characterised in that the control of the outgoing channel and the control of the return channel are effected successively and step by step for each amplifier in the direction of propagation of the outgoing channel, control of the outgoing channel and control of the return channel thus being effected at each amplifier during one and the same geographic movement on the site of the amplifier in question.
